(19) Europäisches Patentamt / European Patent Office / Office européen des brevets

(11) **EP 3 929 561 B1**

(12) **EUROPEAN PATENT SPECIFICATION**

(45) Date of publication and mention of the grant of the patent:
**28.06.2023 Bulletin 2023/26**

(21) Application number: **19916158.9**

(22) Date of filing: **20.02.2019**

(51) International Patent Classification (IPC):
**G01N 3/32** *(2006.01)*          **G01N 29/14** *(2006.01)*
**G01N 3/08** *(2006.01)*          **G01N 29/42** *(2006.01)*
**G01N 29/44** *(2006.01)*          **G01N 29/46** *(2006.01)*

(52) Cooperative Patent Classification (CPC):
**G01N 29/4436; G01N 3/08; G01N 3/32;**
**G01N 29/14; G01N 29/42; G01N 29/46;**
G01N 2203/0017; G01N 2203/0096;
G01N 2203/0658; G01N 2291/0231;
G01N 2291/0258

(86) International application number:
**PCT/JP2019/006334**

(87) International publication number:
**WO 2020/170359 (27.08.2020 Gazette 2020/35)**

(54) **DEVICE AND METHOD FOR EVALUATING SOUNDNESS OF FIBER-REINFORCED COMPOSITE MATERIAL**

VORRICHTUNG UND VERFAHREN ZUR BEWERTUNG DER STABILITÄT EINES FASERVERSTÄRKTEN VERBUNDSTOFFES

DISPOSITIF ET PROCÉDÉ D'ÉVALUATION DE LA SOLIDITÉ D'UN MATÉRIAU COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.12.2021 Bulletin 2021/52**

(73) Proprietor: IHI Inspection and Instrumentation Co., Ltd.
**Tokyo 140-0013 (JP)**

(72) Inventor: **KAWASAKI Hiraku**
**Yokohama-shi, Kanagawa 236-0004 (JP)**

(74) Representative: **Grünecker Patent- und Rechtsanwälte**
**PartG mbB**
**Leopoldstraße 4**
**80802 München (DE)**

(56) References cited:
**JP-A- S5 674 651          JP-A- H11 218 475**
**JP-A- 2014 142 273          JP-A- 2017 166 953**
**US-A1- 2001 047 691**

• **Kawasaki Hiraku ET AL: "DEFEKTOSKOPIE 2018 43 Czech Society for Nondestructive Testing STUDY ON HEALTH MONITORING METHOD OF ACOUSTIC EMISSION USING FREQUENCY SHIFT", -City Conference Center, 1 January 2018 (2018-01-01), pages 1-6, XP055948603, Retrieved from the Internet: URL:https://www.ndt.net/article/defektosko pie2018/papers/6.pdf [retrieved on 2022-08-03]**

**Description**

Technical Field

The present invention relates to a device and method for evaluating the soundness of fiber-reinforced composite materials using the Kaiser effect.

Background Art

A fiber-reinforced composite material (fiber reinforced plastic (FRP)) is a composite material made of plastic reinforced with glass, carbon, or other fibers blended therein, and is known as a lightweight and strong material.

In particular, a carbon fiber-reinforced composite material (carbon fiber reinforced plastic (CFRP)) has higher specific strength and corrosion resistance than metal, and is used in rockets, aircraft, and the like.

In FRP, delamination of the laminates and disconnection of the fibers occur before destruction. FRP has lower impact resistance than metal, and its damage is difficult to detect.

For inspecting the tensile strength of such FRP, the Kaiser effect has been used. The "Kaiser effect" refers to an irreversible phenomenon in which, once an external stress is applied to a solid material to generate acoustic emission (AE waves), the AE waves will not be generated, even if reloaded, until the previous stress value is exceeded.

It should be noted that the AE waves are acoustic waves generated in a material due to deformation or destruction of the material. The Kaiser effect can be obtained in sound materials.

A method for inspecting the soundness of a test body using the Kaiser effect is described, for example, in Patent Literature (PTL) 1. However, such inspection methods had the following problems (1) and (2).

(1) An incorrectly set maximum value of the load initially applied to a test body will result in failure to evaluate the tensile strength of the test body. If the maximum value of the initial load applied is greater than the tensile strength of the test body, the Kaiser effect cannot be used due to the absence of such effect, disabling the evaluation of the tensile strength of the test body.
(2) Repeating the process of applying tensile load and removing tensile load is time consuming.

Patent Literature (PTL) 2 has thus been proposed as a new strength inspection method for test bodies using the Kaiser effect.

In the "strength inspection method" of PTL 2, the tensile load applied to a test body is increased over time, and the magnitude of the AE waves generated in the test body is measured at each time point in the test period. On the basis of the magnitude of the AE waves measured at each time point, a plurality of frequency components of the AE waves in each of a plurality of load application sections included in the test period are obtained, and the frequency center of gravity of the AE waves is obtained for each load application section on the basis of the plurality of frequency components. Among the plurality of load application sections, the load application section where the frequency center of gravity is lower than that of the previous load application section is identified, and the magnitude of the tensile load applied to the test body in the identified load application section is determined to be the tensile strength of the test body.

Citation List

Patent Literature

PTL 1: Japanese Patent Publication Laid-open No. H10-090235
PTL 2: Japanese Patent No. 5841081

Further methods and devices for inspecting delamination of laminates using the Kaiser effect are disclosed in PTL JP-A-2017166953 and non patent literature "STUDY ON HEALTH MONITORING METHOD OF ACOUSTIC EMISSION USING FREQUENCY SHIFT", H. Kawasaki, M. Omori, S. Omori, DEFEKTOSKOPIE 2018, Czech Society for Nondestructive Testing.

Summary of Invention

Technical Problem

The method of PTL 2 can reduce the possibility of incorrectly setting the maximum value of the load initially applied to the test body, and also reduce the time required for strength inspection.
However, the method of PTL 2 described above had the following problems (3) and (4).
(3) In the method of PTL 2, it is necessary to constantly increase the tensile load applied to the test body over time.
However, means for evaluating the soundness of fiber-reinforced composite materials (FRP) using the AE waves have been established in, for example, ASME standards (e.g., ASME Section V, Article 11).
Therefore, if a pre-established pattern of loading includes load retention or load reduction (unloading), the method of PTL 2 could not be applied.
(4) The point in time of the occurrence of delamination immediately preceding breakage and the load at the point cannot be ascertained.
This means that a pressure test on a pressure vessel, for example, would have to be continued until the delamination that has occurred actually reaches breakage, possibly causing damages to the device and the like due to the impact at the time of breakage and the like.
The present invention has been conceived in order to solve the above-described problems. That is, a first object of the present invention is to provide a device and method for evaluating the soundness of a fiber-reinforced composite material that can easily and reliably detect delamination immediately preceding breakage in a loading pattern that includes load retention or load reduction (unloading).
A second object of the present invention is to provide a device and method for evaluating the soundness of a fiber-reinforced composite material that can evaluate the soundness without testing until the material actually breaks and that can reduce the evaluation time even when applying a loading pattern that includes load retention or load reduction (unloading).

Solution to Problem

The present invention provides a device for evaluating soundness of a fiber-reinforced composite material, including:

an AE sensor attached to a test body made of the fiber-reinforced composite material to detect an AE wave;
a load test device that applies a load to the test body by repeating a loading pattern including raising, retaining, and unloading the load, while increasing a maximum load in sequence;
a storage device that stores the AE waves detected by the AE sensor together with the loads;
a frequency center of gravity calculation unit that calculates a frequency center of gravity of the AE waves on the basis of a relationship between a frequency of the AE wave and an intensity thereof; and
a determination device that determines that delamination immediately preceding breakage has occurred in the case where the frequency center of gravity is less than a predetermined first frequency.

The present invention further provides a method for evaluating soundness of a fiber-reinforced composite material, including the steps of:

(A) attaching an AE sensor detecting an AE wave to a test body made of the fiber-reinforced composite material;
(B) applying a load to the test body by repeating a loading pattern including raising, retaining, and unloading the load, while increasing a maximum load in sequence;
(C) storing the AE waves detected by the AE sensor together with the loads;
(D) calculating a frequency center of gravity of the AE waves on the basis of a relationship between a frequency of the AE wave and an intensity thereof; and
(E) determining that delamination immediately preceding breakage has occurred in the case where the frequency center of gravity is less than a predetermined first frequency.

Advantageous Effects of Invention

The inventors of the present invention calculated the frequency center of gravity of AE waves generated in a fiber-reinforced composite material (FRP) on the basis of the relationship between the frequency of the AE wave and the intensity thereof, and focused on the relationship between the frequency center of gravity and the form (micro cracks, matrix cracks, delamination, and breakage) of the FRP until breakage.

As a result, the inventors newly found that when the FRP is sound, the frequency center of gravity of the AE waves generated with micro cracks or matrix cracks is high, whereas when the FRP is damaged, the frequency center of gravity of the AE waves becomes low (e.g., less than 80 kHz) due to delamination.

The present invention is based on such novel findings.

According to the present invention described above, the load is applied to the test body by repeating the loading pattern including raising, retaining, and unloading the load, with the maximum load being increased in sequence. Any loading pattern can be applied, without being limited to a loading pattern that constantly increases the load over time.

In addition, the frequency center of gravity of the AE waves is calculated on the basis of the relationship between the frequency of the AE wave and the intensity thereof, and it is determined that delamination immediately preceding breakage has occurred in the case where the frequency center of gravity is less than the predetermined first frequency (e.g., less than 80 kHz). This enables easy and reliable detection of the delamination immediately preceding breakage.

Even if the maximum value of the load initially applied to the test body is set incorrectly, the occurrence of the delamination immediately preceding breakage can be determined before the maximum value is reached, thus allowing the tensile strength of the test body to be evaluated using the Kaiser effect.

In addition, the test can be terminated at the time when the occurrence of the delamination immediately preceding breakage is determined, so the soundness evaluation can be done without testing until the breakage actually occurs.

Furthermore, the soundness evaluation can be omitted or simplified as long as the frequency center of gravity is above the predetermined first frequency. This reduces the evaluation time even if the loading pattern that includes load retention or load reduction (unloading) is applied.

Brief Description of Drawings

Fig. 1 shows an overall configuration of a device for evaluating the soundness of a fiber-reinforced composite material according to the present invention;

Fig. 2 illustrates a relationship between the frequency of an AE wave and the intensity thereof;

Fig. 3 illustrates an overall flow of a method for evaluating the soundness of a fiber-reinforced composite material according to the present invention;

Fig. 4 shows a conventional example of the Kaiser effect;

Fig. 5 shows a loading pattern of an example of the present invention; and

Fig. 6 illustrates a relationship between the frequency center of gravity of AE waves and the intensity thereof.

Description of Embodiments

Preferred embodiments of the present invention will be described below with reference to the drawings. Throughout the figures, common components are denoted by the same reference numerals, and description thereof will not be repeated.

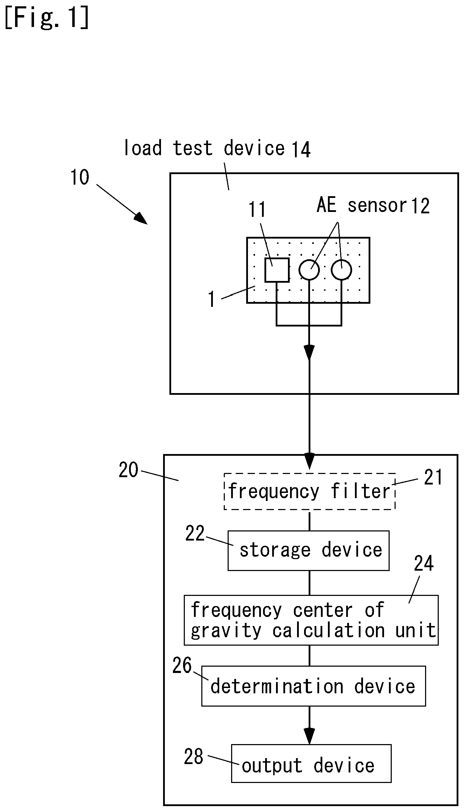

Fig. 1 shows an overall configuration of a soundness evaluation device 10 for a fiber-reinforced composite material according to the present invention.

Referring to the figure, the soundness evaluation device 10 includes an AE sensor 12, a load test device 14, a storage device 22, a frequency center of gravity calculation unit 24, and a determination device 26.

The AE sensor 12 is attached to a test body 1 made of a fiber-reinforced composite material (FRP) to detect AE waves 2.

The FRP is CFRP in the example described below, although it may be any other FRP.

While the test body 1 is a test specimen for tensile testing in the example described below, it may be a pressure vessel (e.g., hydrogen storage tank) or another component (e.g., component of flying object or vehicle).

The AE sensor 12 is an ultrasonic sensor, and at least one AE sensor capable of detecting AE signals with a frequency of 20 to 200 kHz, preferably 20 to 150 kHz, and further preferably 20 to 100 kHz, is used.

For example, only an AE sensor 12 for a low frequency range, capable of detecting AE signals of 20 to 100 kHz, may be used.

This is because the AE signals (AE waves 2) immediately preceding the breakage of CFRP occur at less than 100 kHz, so there is little need to detect the AE waves 2 at 100 kHz or more.

Alternatively, a high-frequency sensor for 100 to 200 kHz and a low-frequency sensor for 20 to 75 kHz may be used.

The load test device 14 applies a load 3 to the test body 1 by repeating a loading pattern 4 including raising, retaining, and unloading the load, while increasing the maximum load 3a in sequence.

The load test device 14 is a tensile test device when the test body 1 is a test specimen for the tensile test, or a pressurization device when the test body 1 is a pressure vessel, although it may be any other device.

The load 3 is measured by a load detector 11 (e.g., strain gauge) attached to the test body 1.

The loading pattern 4 is preset such that the load 3 is raised, retained, and unloaded, with the maximum load 3a being increased in sequence. The loading pattern 4 is preferably based on the ASME standards (ASME Section V, Article 11), although any other loading pattern 4 can be applied.

In Fig. 1, 20 denotes a computer, which includes a storage device 22, a computing device, and an output device 28.

The computer 20 is preferably equipped with a frequency filter 21 to detect only AE signals in the low frequency range of 20 to 100 kHz.

The storage device 22 stores the AE waves 2 detected by the AE sensor 12 together with the loads.

The computing device includes the frequency center of gravity calculation unit 24 and the determination device 26.

The frequency center of gravity calculation unit 24 calculates a frequency center of gravity 5 of AE waves 2 on the basis of a relationship between the frequency of the AE wave 2 and the intensity thereof.

The determination device 26 determines that delamination immediately preceding breakage has occurred in the case where the frequency center of gravity 5 is less than a predetermined first frequency. The "predetermined first frequency" is 80 kHz in the example described below, although it may be set in the range of 60 to 100 kHz, for example, depending on the type of the FRP.

The output device 28 is, for example, an image display device, which at least displays the result of the determination. Preferably, the output device 28 also displays a diagram of the relationship between the frequency center of gravity 5 of the AE waves 2 and the intensity thereof.

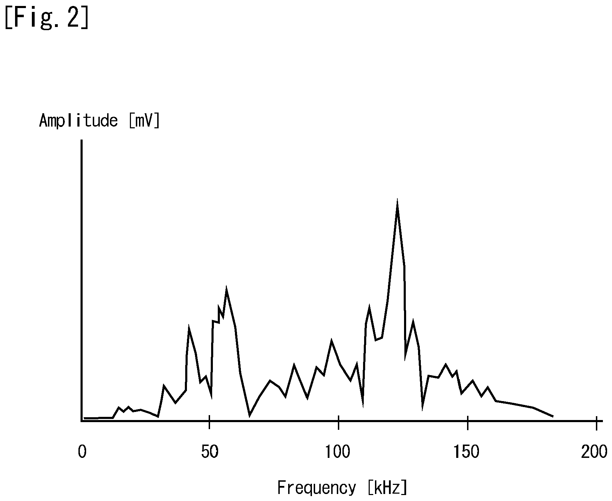

Fig. 2 illustrates a relationship between the frequency of the AE wave 2 and the intensity thereof. In the figure, the horizontal axis represents frequency of the AE wave 2 (Frequency [kHz]) and the vertical axis represents intensity of the AE wave 2 (Amplitude [mV]).

The frequency center of gravity 5 of AE waves 2, or, FCOG (Frequency Center of Gravity), is the frequency at the center of gravity (figure center) in this figure, and can be calculated using the following expression (1).

$$FCOG = \Sigma(fi \times Ai)/\Sigma Ai \quad ... \quad (1)$$

Here, fi is the frequency of the AE wave 2, and Ai is the magnitude (amplitude) of the AE wave 2 at the frequency fi. The suffix i is an index value to distinguish a plurality of frequencies from each other, and takes values from 1 to n (where n is an integer of 2 or greater, preferably a sufficiently large value), and $\Sigma$ indicates the sum for all values of i.

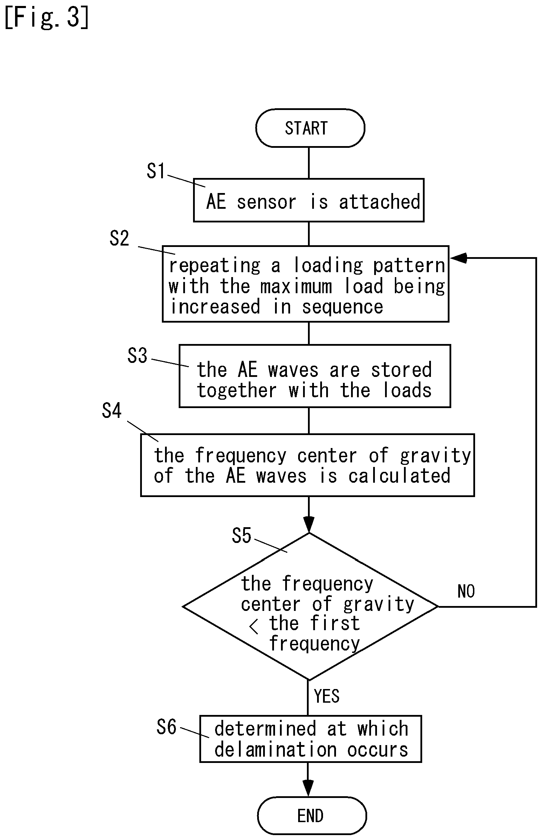

Fig. 3 shows an overall flow of a method for evaluating the soundness of a fiber-reinforced composite material according to the present invention. Referring to the figure, the soundness evaluation method of the present invention uses the soundness evaluation device 10 described above and has steps (process steps) S1 to S6.

In step S1, an AE sensor 12 detecting an AE wave 2 is attached to a test body 1 made of a fiber-reinforced composite material (FRP).

In step S2, a load 3 is applied to the test body 1 by repeating a loading pattern 4 including raising, retaining, and unloading the load, with the maximum load 3a being increased in sequence.

In step S3, the AE waves 2 detected by the AE sensor 12 are stored together with the loads 3.

This step is preferably performed when the frequency of occurrence of AE waves 2 has exceeded a predetermined threshold value. The predetermined threshold value is, for example, 10 to 50 times per second per AE sensor 12, and preferably 10 to 20 times, although it may be changed as appropriate.

In step S4, the frequency center of gravity 5 of the AE waves 2 is calculated on the basis of the relationship between the frequency of the AE wave 2 and the intensity thereof.

In step S5, it is determined whether the frequency center of gravity 5 is less than the predetermined first frequency.

If the frequency center of gravity 5 is determined to be less (YES) than the predetermined first frequency in step S5, it is determined in step S6 that delamination immediately preceding breakage has occurred. If the frequency center of gravity 5 is determined to be not less (NO) than the predetermined first frequency in step S5, steps S2 to S4 are repeated.

In step S6, the tensile load at which the frequency center of gravity 5 is less than the first frequency can be determined to be the tensile load at which delamination occurs.

Further, in step S4, the relationship between the load 3 and the frequency center of gravity 5 can be obtained, and when the frequency center of gravity 5 rises in a predetermined second range with respect to the increase of the load 3, it can be determined that only micro cracks have occurred.

When the frequency center of gravity 5 falls in a predetermined third range with respect to the increase of the load 3 in a higher load range, it can be determined that matrix cracks have occurred.

When the frequency center of gravity 5 is lower than the first frequency in an even higher load range, it can be determined that delamination has occurred.

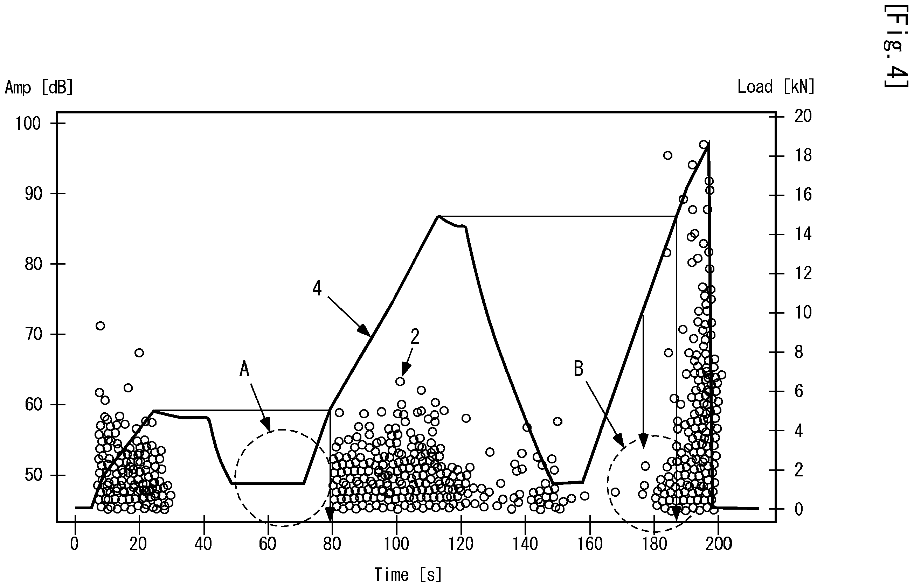

Fig. 4 shows a conventional example of the Kaiser effect.

In the figure, the horizontal axis represents time elapsed from the start of the test (Time [s]), the right vertical axis represents load (Load [kN]), and the left vertical axis represents magnitude of the AE wave 2 (Amp [dB]).

The thick solid line in the figure indicates the loading pattern 4, and the white circles (O) each indicate the detected AE wave 2.

The loading pattern 4 in Fig. 4 shows the load being raised, retained, and unloaded twice, with the maximum load 3a being increased in sequence, until the breakage finally takes place.

Within the dashed circle indicated by A in the figure, no AE wave 2 is generated. It can thus be seen that the Kaiser effect where no AE wave 2 is generated, even if reloaded, until the previous stress value is exceeded is occurring.

In conventional soundness evaluation methods, the soundness ratio (felicity ratio (FR)) is usually used.

The soundness ratio FR can be calculated using the following expression (2).

$$\texttt{FR = (Load that has generated AE wave 2) / (Maximum}$$
$$\texttt{load 3a immediately before) ... (2)}$$

When the FRP is sound, the FR is 1.0 because the AE waves 2 occur only after the previous stress value is exceeded in accordance with the Kaiser effect.

When the FRP is damaged, the Kaiser effect does not occur, and the FR decreases.

Therefore, the soundness can be evaluated by setting FR>0.95, for example, to be the range of soundness.

Within the dashed circle indicated by B in Fig. 4, the loads that have generated the AE waves 2 are low and the FR has decreased, which can be considered to be a sign that the FRP has been damaged.

The conventional soundness evaluation method, however, only shows that the FRP is damaged at approximately 85 dB or less in Fig. 4; the method fails to ascertain the point in time at which delamination immediately preceding breakage occurs and the load at the point.

EXAMPLE

A description will now be made of an example of the soundness evaluation method according to the present invention.

A tensile test was conducted using the soundness evaluation device 10 described above. In this test, firstly, AE sensors 12 detecting AE waves 2 were attached to a test body 1 made of a fiber-reinforced composite material (FRP). A strain gauge was also attached as a load detector 11.

As the test body 1, a test specimen for tensile testing was used. The test specimen was made of CFRP (specifically, T700SC), with four layers of lamination (fiber layers) of 0/45/90/-45.

As the AE sensors 12, a high-frequency sensor for 100 to 200 kHz and a low-frequency sensor for 20 to 75 kHz were used.

A frequency filter 21 was also used to detect only AE signals in the low frequency range of 20 to 100 kHz.

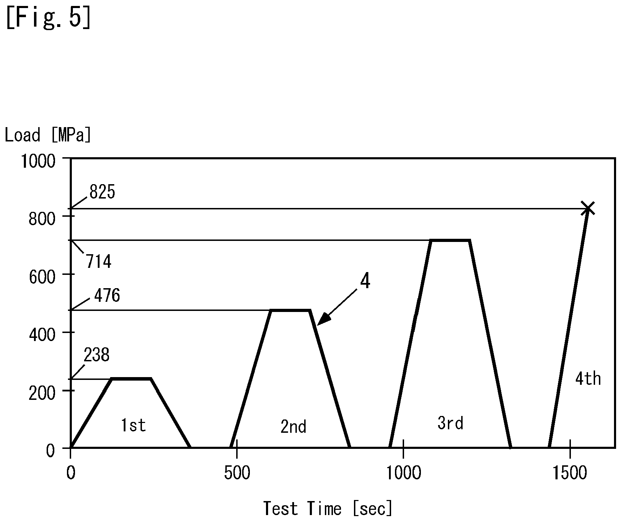

Fig. 5 shows a loading pattern 4 in an example of the present invention. As shown in the figure, the load was applied to the test body 1 by repeating the loading pattern 4 including raising, retaining, and unloading the load three times, with the maximum load 3a being increased in order of 238, 476, and 714 MPa.

The fourth raising of the load was carried out until the breakage of the test body 1. The load at the time of breakage was 825 MPa.

The AE waves 2 detected by the AE sensors 12 were stored in the storage device 22, together with the loads detected by the strain gauge. The frequency center of gravity 5 of the AE waves 2 was calculated by the frequency center of gravity calculation unit 24 on the basis of the relationship between the frequency of the AE wave 2 and the intensity thereof.

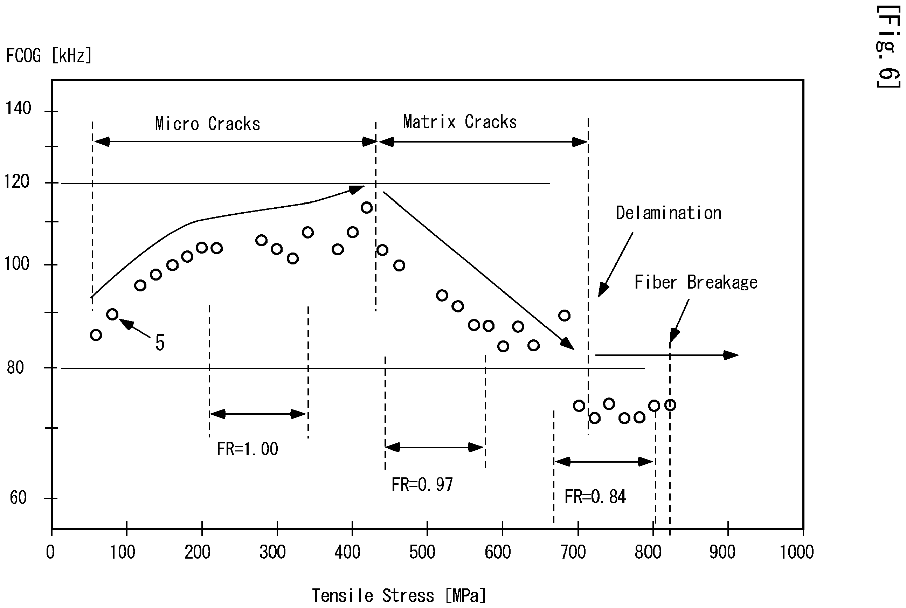

Fig. 6 shows the relationship between the frequency center of gravity 5 of the AE waves 2 and the intensity thereof. In the figure, the horizontal axis represents intensity (Tensile Stress [MPa]) and the vertical axis represents frequency center of gravity 5 (FCOG [kHz]). The white circles (O) in the figure each represent the frequency center of gravity 5 of the detected AE waves 2.

In Fig. 6, the AE waves 2 were detected starting at about 50 MPa, and the frequency center of gravity 5 of the AE waves 2 increased from about 85 kHz to about 115 kHz while the load was raised from 50 MPa to about 430 MPa. Cross-sectional observations showed the occurrence of micro cracks in the FRP during this period. The FR was 1.0 in the range of 210 to 340 MPa in this period.

The term "micro cracks" refers to cracks occurring in the matrix of the FRP with lengths of 20 $\mu$m or more and 100 $\mu$m or less.

From the above results, it can be determined that the FRP is sound and suffers only micro cracks in the case where the frequency center of gravity 5 rises in a predetermined second range with respect to the increase of the load. In this example, the second range is from about 80 kHz to about 120 kHz, and more specifically from about 85 kHz to about 115 kHz.

In Fig. 6, the frequency center of gravity 5 of the AE waves 2 decreased from about 115 kHz to about 83 kHz while the load was raised from about 430 MPa to about 720 MPa. Cross-sectional observations showed the occurrence of matrix cracks in the FRP during this period. The FR was 0.97 in the range of 440 to 580 MPa in this period.

The term "matrix cracks" refers to cracks that have developed from the micro cracks and have the crack lengths exceeding 100 $\mu$m in the matrix, where no delamination has occurred.

From the above results, it can be determined that matrix cracks have occurred in the case where the frequency center of gravity 5 falls in a predetermined third range with respect to the increase of the load in the load range even higher than the range where micro cracks occurred. In this example, the third range is from about 120 kHz to about 80 kHz, and more specifically from about 115 kHz to about 83 kHz.

In Fig. 6, the frequency center of gravity 5 is lower than about 75 kHz in the load range from about 720 MPa to 825 MPa (breaking strength). Cross-sectional observations showed the occurrence of delamination in the FRP during this period. The FR was 0.84 in the range of 670 to 810 MPa.

The term "delamination" refers to the state in which matrix cracks have developed and some of the laminated (stacked) fiber layers have delaminated.

From the above results, it can be determined that delamination has occurred in the case where the frequency center of gravity 5 is lower than the first frequency in the load range even higher than the range in which the matrix cracks occurred. The first frequency is lower than the minimum value of the third range in this example, and is about 80 kHz or about 75 kHz, although it may be set in the range of 60 to 100 kHz, for example, depending on the type of the FRP.

The above example has confirmed that the FRP failure occurs in the order of micro cracks, matrix cracks, delamination, and breakage. In the case of micro cracks and matrix cracks, the frequency center of gravity 5 is 80 kHz or more and 120 kHz or less, and the FR exceeds 0.95, indicating that the FRP is in the range of soundness.

It can also be determined that when the frequency center of gravity 5 is less than the predetermined first frequency, delamination immediately preceding breakage has occurred. In this example, the first frequency is 80 kHz, although it may be set in the range of 60 to 100 kHz, for example, depending on the type of the FRP.

Further, the tensile load at which the frequency center of gravity 5 is not more than the first frequency can be determined to be the tensile load at which delamination occurs.

According to the present invention described above, the load is applied to the test body 1 by repeating the loading pattern 4 including raising, retaining, and unloading the load, with the maximum load 3a being increased in sequence. As such, any given loading pattern 4 can be applied, without being limited to a loading pattern 4 that constantly increases the load over time.

The frequency center of gravity 5 of the AE waves 2 is calculated on the basis of the relationship between the frequency of the AE wave 2 and the intensity thereof, and it is determined that delamination immediately preceding breakage has occurred in the case where the frequency center of gravity 5 is less than the predetermined first frequency (e.g., less than 80 kHz). This enables easy and reliable detection of the delamination immediately preceding breakage.

Even if the maximum value of the load initially applied to the test body 1 is set incorrectly, the occurrence of the delamination immediately preceding breakage can be determined before the maximum value is reached, so the tensile strength of the test body 1 can be evaluated using the Kaiser effect.

In addition, since the test can be terminated at the time when the occurrence of the delamination immediately preceding breakage is determined, soundness evaluation can be done without testing until the breakage actually occurs.

Further, as long as the frequency center of gravity 5 is above the first frequency, the FRP can be determined to be in the range of soundness. The soundness evaluation can thus be omitted or simplified, and the evaluation time can be reduced even when applying a loading pattern 4 including load retention or load reduction (unloading).

Furthermore, the AE signals detected by the high-frequency sensor for 100 to 200 kHz have almost no effect on the frequency center of gravity 5 below the first frequency, so the high-frequency sensor can be omitted, leading to halving the number of sensors installed. In this case, it is preferable to use a frequency filter 21 to detect only the AE signals in the low frequency range of 20 to 100 kHz.

Reference Signs List

1: test body; 2: AE wave; 3: load; 3a: maximum load; 4: loading pattern; 5: frequency center of gravity; 10: soundness evaluation device; 11: load detector; 12: AE sensor; 14: load test device; 20: computer; 21: frequency filter;

22: storage device; 24: frequency center of gravity calculation unit; 26: determination device; and 28: output device.

**Claims**

1.  A device for evaluating soundness of a fiber-reinforced composite material, comprising:

    an AE sensor that can be attached to a test body made of the fiber-reinforced composite material to detect an AE wave;
    a load test device configured to apply a load to the test body by repeating a loading pattern including raising, retaining, and unloading the load, while increasing a maximum load in sequence;
    a storage device configured to store the AE waves detected by the AE sensor together with the loads;
    a frequency center of gravity calculation unit configured to calculate a frequency center of gravity of the AE waves on the basis of a relationship between a frequency of the AE wave and an intensity thereof; **characterized in that** it further comprises
    a determination device configured to determine that delamination immediately preceding breakage has occurred in the case where the frequency center of gravity is less than a predetermined first frequency.

2.  A method for evaluating soundness of a fiber-reinforced composite material, comprising the steps of:

    (A) attaching an AE sensor that detects an AE wave to a test body made of the fiber-reinforced composite material;
    (B) applying a load to the test body by repeating a loading pattern including raising, retaining, and unloading the load, while increasing a maximum load in sequence;
    (C) storing the AE waves detected by the AE sensor together with the loads;
    (D) calculating a frequency center of gravity of the AE waves on the basis of a relationship between a frequency of the AE wave and an intensity thereof; **characterized in that** it further comprises the step of
    (E) determining that delamination immediately preceding breakage has occurred in the case where the frequency center of gravity is less than a predetermined first frequency.

3.  The method for evaluating soundness of a fiber-reinforced composite material according to claim 2, including determining a tensile load at which the frequency center of gravity is less than the first frequency as a tensile load at which the delamination occurs.

4.  The method for evaluating soundness of a fiber-reinforced composite material according to claim 2, including

    obtaining a relationship between the load and the frequency center of gravity,
    determining that only micro cracks have occurred in the case where the frequency center of gravity rises in a predetermined second range with respect to an increase of the load,
    determining that matrix cracks have occurred in the case where the frequency center of gravity falls in a predetermined third range with respect to an increase of the load in a higher load range, and
    determining that the delamination has occurred in the case where the frequency center of gravity is lower than the first frequency in a still higher load range.

5.  The method for evaluating soundness of a fiber-reinforced composite material according to claim 2, wherein the step (C) is performed in response to the frequency of occurrence of the AE waves exceeding a predetermined threshold value.

**Patentansprüche**

1.  Vorrichtung zum Bewerten der Festigkeit eines faserverstärkten Verbundmaterials, umfassend:

    einen AE-Sensor, der an einem Prüfkörper aus dem faserverstärkten Verbundwerkmaterial angebracht werden kann, um eine AE-Welle zu erfassen;
    eine Belastungsprüfvorrichtung, die dazu eingerichtet ist, eine Belastung auf den Prüfkörper auszuüben, indem sie ein Belastungsmuster wiederholt, das das Anheben, Halten und Entlasten der Belastung einschließt, während sie eine maximale Belastung nacheinander erhöht;
    eine Speichervorrichtung, die dazu eingerichtet ist, die von dem AE-Sensor erfassten AE-Wellen zusammen mit den Belastungen zu speichern;

eine Frequenzschwerpunkts-Berechnungseinheit, die dazu eingerichtet ist, einen Frequenzschwerpunkt der AE-Wellen auf der Grundlage einer Beziehung zwischen einer Frequenz der AE-Welle und einer Intensität derselben zu berechnen;

**dadurch gekennzeichnet, dass** sie weiterhin umfasst:

eine Bestimmungsvorrichtung, die dazu eingerichtet ist zu bestimmen, dass eine Delamination unmittelbar vor einem Bruch aufgetreten ist, wenn der Frequenzschwerpunkt unter einer vorbestimmten ersten Frequenz liegt.

2. Verfahren zum Bewerten der Festigkeit eines faserverstärkten Verbundmaterials, umfassend folgende Schritte:

(A) Anbringen eines AE-Sensors, der eine AE-Welle erfasst, an einem Prüfkörper aus dem faserverstärkten Verbundmaterial;

(B) Ausüben einer Belastung auf den Prüfkörper durch Wiederholen eines Belastungsmusters, das das Anheben, Halten und Entlasten der Belastung einschließt, während eine maximale Belastung nacheinander erhöht wird;

(C) Speichern der von dem AE-Sensor erfassten AE-Wellen zusammen mit den Belastungen;

(D) Berechnen eines Frequenzschwerpunkts der AE-Wellen auf der Grundlage einer Beziehung zwischen einer Frequenz der AE-Welle und einer Intensität derselben;

**dadurch gekennzeichnet, dass** es weiterhin den folgenden Schritt umfasst:

(E) Bestimmen, dass eine Delamination unmittelbar vor dem Bruch aufgetreten ist, wenn der Frequenzschwerpunkt unter einer vorbestimmten ersten Frequenz liegt.

3. Verfahren zum Bewerten der Festigkeit eines faserverstärkten Verbundmaterials nach Anspruch 2, umfassend das Bestimmen einer Zugbelastung, bei der der Frequenzschwerpunkt kleiner als die erste Frequenz ist, als Zugbelastung, bei der die Delamination auftritt.

4. Verfahren zum Bewerten der Festigkeit eines faserverstärkten Verbundmaterials nach Anspruch 2, umfassend:

Erhalten einer Beziehung zwischen der Belastung und dem Frequenzschwerpunkt,

Bestimmen, dass nur Mikrorisse aufgetreten sind, wenn der Frequenzschwerpunkt in einem vorbestimmten zweiten Bereich in Bezug auf eine Erhöhung der Belastung ansteigt,

Bestimmen, dass Matrixrisse in dem Fall aufgetreten sind, in dem der Frequenzschwerpunkt in einem vorbestimmten dritten Bereich in Bezug auf eine Erhöhung der Belastung in einem höheren Belastungsbereich fällt, und

Bestimmen, dass die Delamination in dem Fall aufgetreten ist, in dem der Frequenzschwerpunkt in einem noch höheren Belastungsbereich niedriger als die erste Frequenz ist.

5. Verfahren zum Bewerten der Festigkeit eines faserverstärkten Verbundmaterials nach Anspruch 2, bei dem der Schritt (C) als Reaktion darauf ausgeführt wird, dass die Häufigkeit des Auftretens der AE-Wellen einen vorgegebenen Schwellenwert überschreitet.

## Revendications

1. Dispositif d'évaluation de la solidité d'un matériau composite renforcé par des fibres, comprenant :

un capteur d'AE qui peut être fixé à un corps d'essai en matériau composite renforcé par des fibres pour détecter une onde d'AE ;

un dispositif d'essai de charge configuré pour appliquer une charge au corps de test en répétant un schéma de charge comprenant le soulèvement, le maintien et le déchargement de la charge, tout en augmentant une charge maximale dans l'ordre ;

un dispositif de stockage configuré pour stocker les ondes d'AE détectées par le capteur d'AE ainsi que les charges ;

une unité de calcul du centre de gravité de la fréquence configurée pour calculer le centre de gravité de la fréquence des ondes d'AE sur la base d'une relation entre la fréquence de l'onde d'AE et son intensité ;

**caractérisé en ce qu'**il comprend en outre un dispositif de détermination configuré pour déterminer que la délamination précédant immédiatement la rupture s'est produite dans le cas où le centre de gravité de la fréquence est inférieur à une première fréquence prédéterminée.

2. Procédé d'évaluation de la solidité d'un matériau composite renforcé par des fibres, comprenant les étapes suivantes consistant à :

(A) fixer un capteur d'AE qui détecte une onde d'AE à un corps de test constitué du matériau composite renforcé par des fibres ;
(B) appliquer une charge au corps de test en répétant un schéma de charge comprenant le soulèvement, le maintien et le déchargement de la charge, tout en augmentant une charge maximale dans l'ordre ;
(C) stocker les ondes d'AE détectées par le capteur d'AE ainsi que les charges ;
(D) calculer le centre de gravité de la fréquence des ondes d'AE sur la base d'une relation entre la fréquence de l'onde d'AE et son intensité ; **caractérisée par le fait qu'**elle comprend en outre l'étape suivante consistant à
(E) déterminer que la délamination précédant immédiatement la rupture s'est produite dans le cas où le centre de gravité de la fréquence est inférieur à une première fréquence prédéterminée.

3. Procédé d'évaluation de la solidité d'un matériau composite renforcé par des fibres selon la revendication 2, incluant la détermination d'une charge de traction pour laquelle le centre de gravité de la fréquence est inférieur à la première fréquence en tant que charge de traction pour laquelle la délamination se produit.

4. Procédé d'évaluation de la solidité d'un matériau composite renforcé par des fibres selon la revendication 2, comprenant l'obtention d'une relation entre la charge et le centre de gravité de la fréquence,

déterminer que seules des microfissures se sont produites dans le cas où le centre de gravité de la fréquence augmente dans une deuxième plage prédéterminée par rapport à une augmentation de la charge,
déterminer que des fissures matricielles se sont produites dans le cas où le centre de gravité de la fréquence tombe dans une troisième plage prédéterminée par rapport à une augmentation de la charge dans une plage de charge plus élevée, et
déterminer que la délamination s'est produite dans le cas où le centre de gravité de la fréquence est inférieur à la première fréquence dans une plage de charge encore plus élevée.

5. Procédé d'évaluation de la solidité d'un matériau composite renforcé par des fibres selon la revendication 2, dans lequel l'étape (C) est réalisée en réponse à une fréquence d'apparition des ondes d'AE supérieure à une valeur seuil prédéterminée.

[Fig. 2]

[Fig. 3]

```
                    ┌─────────────┐
                    │    START    │
                    └──────┬──────┘
                           │
S1 ┌───────────────────────┴────────────┐
   │       AE sensor is attached         │
   └───────────────────────┬────────────┘
                           │
S2 ┌───────────────────────┴────────────┐◄────┐
   │ repeating a loading pattern         │     │
   │ with the maximum load being         │     │
   │ increased in sequence               │     │
   └───────────────────────┬────────────┘     │
                           │                   │
S3 ┌───────────────────────┴────────────┐      │
   │ the AE waves are stored             │      │
   │ together with the loads             │      │
   └───────────────────────┬────────────┘      │
                           │                    │
S4 ┌───────────────────────┴────────────┐       │
   │ the frequency center of gravity     │       │
   │ of the AE waves is calculated       │       │
   └───────────────────────┬────────────┘       │
                           │                     │
                        ╱─────╲                  │
S5                    ╱  the   ╲       NO         │
                    ╱ frequency  ╲───────────────┘
                    ╲ center of  ╱
                    ╲ gravity   ╱
                      ╲ < the   ╱
                       ╲ first ╱
                        ╲frequency╱
                           │ YES
S6 ┌───────────────────────┴────────────┐
   │ determined at which                 │
   │ delamination occurs                 │
   └───────────────────────┬────────────┘
                           │
                    ┌──────┴──────┐
                    │     END     │
                    └─────────────┘
```

[Fig. 4]

[Fig.5]

[Fig. 6]

[Fig. 1]

load test device 14

10

11

AE sensor 12

1

20

frequency filter 21

22 storage device

24

frequency center of gravity calculation unit

26 determination device

28 output device

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10090235 A
- JP 5841081 B

- JP 2017166953 A

**Non-patent literature cited in the description**

- STUDY ON HEALTH MONITORING METHOD OF ACOUSTIC EMISSION USING FREQUENCY SHIFT. **H. KAWASAKI ; M. OMORI ; S. OMORI.** DEFEKTOSKOPIE. Czech Society for Nondestructive Testing, 2018